Europäisches Patentamt

European Patent Office

Office européen des brevets

(19)

(11) Veröffentlichungsnummer : **0 111 349**
**B1**

(12) **EUROPÄISCHE PATENTSCHRIFT**

(45) Veröffentlichungstag der Patentschrift :
05.03.86

(21) Anmeldenummer : 83201571.3

(22) Anmeldetag : 02.11.83

(51) Int. Cl.⁴ : **C 09 K   5/06**

(54) **Wärmespeichermittel.**

(30) Priorität : 05.11.82 DE 3240855

(43) Veröffentlichungstag der Anmeldung :
20.06.84 Patentblatt 84/25

(45) Bekanntmachung des Hinweises auf die Patenterteilung : 05.03.86 Patentblatt 86/10

(84) Benannte Vertragsstaaten :
DE FR GB IT NL

(56) Entgegenhaltungen :
FR-A- 2 396 061
PATENTS ABSTRACTS OF JAPAN, Band 4, Nr. 81, 11.
Juni 1980, Seite 69C14
PATENTS ABSTRACTS OF JAPAN, Band 5, Nr. 54(C-
50)(726), 15. April 1981
(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**FR GB IT NL**

(72) Erfinder : **Piel, Vera**
**Eifelstrasse 1d**
**D-5100 Aachen (DE)**
Erfinder : **Schröder, Johann, Dr.**
**Adenaueraliee 125a**
**D-5100 Aachen (DE)**

(74) Vertreter : **Piegler, Harald, Dipl.-Chem. et al**
**Philips Patentverwaltung GmbH Billstrasse 80 Post-**
**fach 10 51 49**
**D-2000 Hamburg 28 (DE)**

## Beschreibung

Die Erfindung betrifft ein Wärmespeichermittel mit Phasenübergang fest-flüssig und umgekehrt auf der Basis von Calciumchloridhexahydrat und einem Keimbildner.

Calciumchloridhexahydrat ist wegen seiner hohen Wärmekapazität (1,44 kJ/kg K für die feste Phase und 2,32 kJ/kg K für die flüssige Phase), seiner hohen Schmelzwärme (258 kJ/dm$^3$) und seines günstigen Schmelzpunktes (29 °C) ein sehr geeignetes Wärmespeichermittel, z. B. für Heizsysteme in Verbindung mit Wärmepumpen, Sonnenkollektoren, Fernwärmeversorgungs- und Wärmerückgewinnungsanlagen. Es hat jedoch die sehr nachteilige Eigenschaft, beim Abkühlen unter dem Schmelzpunkt flüssig zu bleiben und um 20 bis 30 Grad zu unterkühlen. In diesem Falle kann man die gespeicherte Schmelzwärme nicht entnehmen und nutzen.

Es ist bekannt, das Unterkühlen von Calciumchloridhexahydrat durch Zusatz von Barium- und Strontiumsalzen zu reduzieren (DE-AS 27 31 572, EP-OS 13 569, JP-OS 56-8483 und 56-8484). Diese Keimbildner haben den Nachteil, daß sie giftig sind.

Es ist ferner bekannt, daß man Cäsium- und/oder Rubidiumaluminiumsulfat zur Vermeidung der Unterkühlung von Ammonium- oder Kaliumaluminiumsulfat (JP-OS 55-45730) und Bleinitrat, Bleichlorid und/oder Bariumsulfat zur Vermeidung der Unterkühlung von Natriumcarbonatdekahydrat (FR-OS 23 96 061) zugeben kann. Keimbildner wirken grundsätzlich nur sehr selektiv auf die Kristallisation von ganz spezifischen Verbindungen ein. Es existiert bisher auch keine brauchbare Theorie oder Regel, nach der man vorgehen könnte, um wirksame Keimbildner für ein bestimmtes Speichermittel zu finden. Es ist also eher eine seltene Ausnahme als ein vorhersehbarer Effekt, wenn eine bestimmte Verbindung zufällig auch auf ein anderes Wärmespeichermittel als Keimbildner wirkt. Ferner besteht nach wie vor ein starkes Bedürfnis, für anerkannt gute Wärmespeichermittel wie Calciumchloridhexahydrat weitere Keimbildner zur Verfügung zu haben.

Die Erfindung hat die Aufgabe, ein Wärmespeichermittel auf der Basis von Calciumchloridhexahydrat mit einem besser wirksamen Keimbildner zu schaffen.

Diese Aufgabe wird erfindungsgemäß dadurch gelöst, daß das Wärmespeichermittel als Keimbildner Cäsiumchlorat, Cäsiumalaundodecahydrat, Wismutphosphat, Wismuttartrathexahydrat, Wismutcarbonat basisch, Wismuthydroxid, Bleicarbonat, Bleioxalat und/oder Bleiphosphat enthält.

Es wurde also gefunden, daß einige spezielle Cäsium-, Wismut-, und Bleisalze die Unterkühlung von Calciumchloridhexahydrat wirksam reduzieren. Der Vorteil dieser speziellen Cäsium- und Wismutsalze liegt darin, daß sie nicht giftig sind und schon in relativ kleiner Menge wirken. Die Bleisalze sind zwar giftig, haben den Vorteil einer sehr geringen Löslichkeit und der damit verbundenen sehr kleinen Menge, die als Zusatz für die Keimbildung erforderlich ist ; außerdem sind die Bleisalze billiger als die bekannten Keimbildner. Es genügt daher, diese Keimbildner in den in der Tabelle angegebenen Mengen zuzusetzen.

Die Erfindung wird anhand einiger Ausführungsbeispiele näher erläutert, die in der nachfolgenden Tabelle zusammengestellt sind. Die volle Wirksamkeit der darin aufgeführten Keimbildner ist erst nach Durchlaufen von einigen Speicherzyklen (etwa 5- bis 10maliges Aufschmelzen und Grefieren) gegeben.

(Siehe Tabelle Seite 3 f.)

| Beispiel Nr. | Keimbildner | Formel | Löslichkeit g/100 cm$^3$ H$_2$O | Optimale Zusatzmenge g/100 cm$^3$ CaCl$_2$.6H$_2$O | Im Beispiel angewandte Zusatzmenge g/100 cm$^3$ CaCl$_2$.6H$_2$O | Unterkühlung Grad unter Schmelzpunkt (29°C) |
|---|---|---|---|---|---|---|
| 1 | Cäsium-perchlorat | $CsClO_4$ | 1,17 | 1,0 bis 2,0 | 1,0 | 1 bis 3 |
| 2 | Cäsiumalaun | $CsAl(SO_4).12\ H_2O$ | 0,35 | 0,4 bis 1,0 | 0,5 | 1 bis 2 |
| 3 | Wismutphosphat | $BiPO_4$ | unlöslich | 0,05 bis 0,5 | 0,1 | 3 bis 5 |
| 4 | Wismuttartrat | $Bi_2(C_4H_4O_6)_3 . 6\ H_2O$ | unlöslich | 0,05 bis 0,5 | 0,1 | 2 bis 4 |
| 5 | Wismutcarbonat basisch | $Bi_2O_2CO_3$ | unlöslich | 0,05 bis 0,5 | 0,1 | 1 bis 3 |
| 6 | Wismuthydroxid | $Bi(OH)_3$ | 0,00014 | 0,05 bis 0,5 | 0,1 | 4 bis 6 |
| 7 | Bleicarbonat | $PbCO_3$ | $1,1.10^{-4}$ | 0,3 bis 1,0 | 0,3 | 2 bis 3 |
| 8 | Bleioxalat | $PbC_2O_4$ | $1,6.10^{-4}$ | 0,3 bis 1,0 | 0,3 | 2 bis 3 |
| 9 | Bleiphosphat | $Pb_3(PO_4)2$ | $1,4.10^{-5}$ | 0,2 bis 1,0 | 0,2 | 3 bis 4 |

0 111 349

**Patentansprüche**

1. Wärmespeichermittel mit Phasenübergang fest-flüssig und umgekehrt auf der Basis von Calciumchloridhexahydrat und einem Keimbildner, dadurch gekennzeichnet, daß es als Keimbildner Cäsiumchlorat, Cäsiumalaundodecahydrat, Wismutphosphat, Wismuttartrathexahydrat, Wismutcarbonat basisch, Wismuthydroxid, Bleicarbonat, Bleioxalat und/oder Bleiphosphat enthält.

2. Wärmespeichermittel nach Anspruch 1, dadurch gekennzeichnet, daß es als Keimbildner Cäsiumperchlorat in einer Menge von 1 bis 2 g, bezogen auf 100 $cm^3$ $CaCl_2 \cdot 6H_2O$, enthält.

3. Wärmespeichermittel nach Anspruch 1, dadurch gekennzeichnet, daß es als Keimbildner Cäsiumalaundodecahydrat in einer Menge von 0,4 bis 1,0 g, bezogen auf 100 $cm^3$ $CaCl_2 \cdot 6H_2O$, enthält.

4. Wärmespeichermittel nach Anspruch 1, dadurch gekennzeichnet, daß es als Keimbildner Wismutphosphat in einer Menge von 0,05 bis 0,5 g, bezogen auf 100 $cm^3$ $CaCl_2 \cdot 6H_2O$, enthält.

5. Wärmespeichermittel nach Anspruch 1, dadurch gekennzeichnet, daß es als Keimbildner Wismuttartrathexahydrat in einer Menge von 0,05 g bis 0,5 g, bezogen auf 100 $cm^3$ $CaCl_2 \cdot 6H_2O$, enthält.

6. Wärmespeichermittel nach Anspruch 1, dadurch gekennzeichnet, daß es als Keimbildner basisches Wismutcarbonat in einer Menge von 0,05 bis 0,5 g, bezogen auf 100 $cm^3$ $CaCl_2 \cdot 6H_2O$, enthält.

7. Wärmespeichermittel nach Anspruch 1, dadurch gekennzeichnet, daß es als Keimbildner Wismuthydroxid in einer Menge von 0,05 bis 0,5 g, bezogen auf 100 $cm^3$ $CaCl_2 \cdot 6H_2O$, enthält.

8. Wärmespeichermittel nach Anspruch 1, dadurch gekennzeichnet, daß es als Keimbildner Bleicarbonat in einer Menge von 0,3 bis 1,0 g, bezogen auf 100 $cm^3$ $CaCl_2 \cdot 6H_2O$, enthält.

9. Wärmespeichermittel nach Anspruch 1, dadurch gekennzeichnet, daß es als Keimbildner Bleioxalat in einer Menge von 0,3 bis 1,0 g, bezogen auf 100 $cm^3$ $CaCl_2 \cdot 6H_2O$, enthält.

10. Wärmespeichermittel nach Anspruch 1, dadurch gekennzeichnet, daß es als Keimbildner Bleiphosphat in einer Menge von 0,2 bis 1,0 g, bezogen auf 100 $cm^3$ $CaCl_2 \cdot 6H_2O$, enthält.

**Claims**

1. A heat accumulating agent having a reversible solid-liquid phase transition based on calcium chloride hexahydrate and a nucleating agent, characterized in that as a nucleating agent it comprises caesium chlorate, caesium alumdodecahydrate, bismuth phosphate, bismuth tartrate hexahydrate, basic bismuth carbonate, bismuth hydroxide, lead carbonate, lead oxalate and/or lead phosphate.

2. A heat accumulating agent as claimed in Claim 1, characterized in that it comprises as a nucleating agent caesium perchlorate in a quantity of 1 to 2 g related to 100 $cm^3$ of $CaCl_2 \cdot 6H_2O$.

3. A heat accumulating agent as claimed in Claim 1, characterized in that it comprises as a nucleating agent caesium alumdodecahydrate in a quantity of 0.4 to 1.0 g related to 100 $cm^3$ of $CaCl_2 \cdot 6H_2O$.

4. A heat accumulating agent as claimed in Claim 1, characterized in that it comprises as a nucleating agent bismuth phosphate in a quantity of 0.05 to 0.5 g related to 100 $cm^3$ of $CaCl_2 \cdot 6H_2O$.

5. A heat accumulating agent as claimed in Claim 1, characterized in that it comprises as a nucleating agent bismuth tartrate hexahydrate in a quantity of 0.05 g to 0.5 g related to 100 $cm^3$ of $CaCl_2 \cdot 6H_2O$.

6. A heat accumulating agent as claimed in Claim 1, characterized in that it comprises as a nucleating agent basic bismuth carbonate in a quantity of 0.05 to 0.5 g related to 100 $cm^3$ of $CaCl_2 \cdot 6H_2O$.

7. A heat accumulating agent as claimed in Claim 1, characterized in that it comprises as a nucleating agent bismuth hydroxide in a quantity of 0.05 to 0.5 g related to 100 $cm^3$ of $CaCl_2 \cdot 6H_2O$.

8. A heat accumulating agent as claimed in Claim 1, characterized in that it comprises as a nucleating agent lead carbonate in a quantity of 0.3 to 1.0 g related to 100 $cm^3$ of $CaCl_2 \cdot 6H_2O$.

9. A heat accumulating agent as claimed in Claim 1, characterized in that it comprises as a nucleating agent lead oxalate in a quantity of 0.3 to 1.0 g related to 100 $cm^3$ of $CaCl_2 \cdot 6H_2O$.

10. A heat accumulating agent as claimed in Claim 1, characterized in that it comprises as a nucleating agent lead phosphate in a quantity of 0.2 to 1.0 g related to 100 $cm^3$ of $CaCl_2 \cdot 6H_2O$.

**Revendications**

1. Agent accumulateur de chaleur présentant une transition de phase solide-liquide et inversement à base de l'hexahydrate de chlorure de calcium et d'un agent de germination, caractérisé en ce que comme agent de germination, il contient du chlorate de césium, du dodécahydrate de césium-alun, du phosphate de bismuth, de l'hexahydrate de tartrate de bismuth, du carbonate de bismuth basique, de l'hydroxyde de bismuth, du carbonate de plomb, de l'oxalate de plomb et/ou du phosphate de plomb.

2. Agent accumulateur de chaleur selon la revendication 1, caractérisé en ce que comme agent de germination il contient du chlorate de césium dans une quantité de 1 à 2 g, rapportée à 100 $cm^3$ de $CaCl_2 \cdot 6H_2O$.

3. Agent accumulateur de chaleur selon la revendication 1, caractérisé en ce que comme agent de germination, il contient du dodécahydrate de césium-alun dans une quantité de 0,4 à 1,0 g rapportée à 100 $cm^3$ de $CaCl_2 \cdot 6H_2O$.

4. Agent accumulateur de chaleur selon la revendication 1, caractérisé en ce que comme agent de germination il contient du phosphate de bismuth dans une quantité de 0,05 à 0,5 g, rapportée à 100 cm$^3$ de $CaCl_2 \cdot 6H_2O$.

5. Agent accumulateur de chaleur selon la revendication 1, caractérisé en ce que comme agent de germination, il contient de l'hexahydrate de tartrate de bismuth dans une quantité de 0,05 g à 0,5 g rapportée à 100 cm$^3$ de $CaCl_2 \cdot 6H_2O$.

6. Agent accumulateur de chaleur selon la revendication 1, caractérisé en ce que comme agent de germination il contient du carbonate de bismuth basique dans une quantité de 0,05 à 0,5 g, rapportée à 100 cm$^3$ de $CaCl_2 \cdot 6H_2O$.

7. Agent accumulateur de chaleur selon la revendication 1, caractérisé en ce que comme agent de germination, il contient de l'hydroxyde de bismuth dans une quantité de 0,05 à 0,5 g, rapportée à 100 cm$^3$ de $CaCl_2 \cdot 6H_2O$.

8. Agent accumulateur de chaleur selon la revendication 1, caractérisé en ce que comme agent de germination, il contient du carbonate de plomb dans une quantité de 0,3 à 1,0 g, rapportée à 100 cm$^3$ de $CaCl_2 \cdot 6H_2O$.

9. Agent accumulateur de chaleur selon la revendication 1, caractérisé en ce que comme agent de germination, il contient de l'oxalate de plomb dans une quantité de 0,3 à 1,0 g, rapportée à 100 cm$^3$ de $CaCl_2 \cdot 6H_2O$.

10. Agent accumulateur de chaleur selon la revendication 1, caractérisé en ce que comme agent de germination, il contient du phosphate de plomb dans une quantité de 0,2 à 1,0 g, rapportée à 100 cm$^3$ de $CaCl_2 \cdot 6H_2O$.